## Europäisches Patentamt

## European Patent Office

## Office européen des brevets

(19)

(11) Veröffentlichungsnummer: **0 280 898**
**A1**

(12) **EUROPÄISCHE PATENTANMELDUNG**

(21) Anmeldenummer: 88101555.6

(51) Int. Cl.4: **H04B 3/23**

(22) Anmeldetag: 03.02.88

(30) Priorität: 18.02.87 DE 3705174

(43) Veröffentlichungstag der Anmeldung:
07.09.88 Patentblatt 88/36

(84) Benannte Vertragsstaaten:
AT CH DE IT LI SE

(71) Anmelder: Siemens Aktiengesellschaft Berlin
und München
Wittelsbacherplatz 2
D-8000 München 2(DE)

(72) Erfinder: Schenk, Heinrich, Dr.-Ing.
Becker-Gundahl-Strasse 1
D-8000 München 71(DE)

(54) Schaltungsanordnung zum Unterdrücken von Echosignalen.

(57) Die Schaltungsanordnung soll es ermöglichen, bei einer Duplex-Übertragung von Digitalsignalen über eine Zweidraht-Leitung zusammen mit den empfangenen Digitalsignalen auftretende lineare und nichtlineare Echosignalanteile wirksam zu kompensieren. Die Schaltungsanordnung soll dabei ein günstiges Einlaufverhalten aufweisen.

Die Schaltungsanordnung weist einen ersten, mit den zu übertragenden Digitalsignalen beaufschlagten Echokompensator (LK) auf, der lediglich Kompensationssignale für die Kompensation der linear von den zu übertragenden Digitalsignalen abhängigen Echosignalanteile bereitstellt. Ferner sind bzw. ist ein zweiter, mit den von dem ersten Echokompensator bereitgestellten Kompensations-signalen beaufschlagter Echokompensator (NK1) und/oder ein dritter, mit den zu übertragenden Digitalsignalen beaufschlagter Echokompensator (NK2) vorgesehen. Der zweite bzw. dritte Echokompensator stellt dabei lediglich Kompensationssignale für die Kompensation der nichtlinear von den zu übertragenden Digitalsignalen abhängigen Echosignalanteile bereit.

Die Schaltungsanordnung ist in Datenübertragungseinrichtungen einsetzbar, die über ein oder mehrere Nichtlinearitäten in den Echosignalen hervorrufende Schaltungsteile verfügen.

FIG 1

## Schaltungsanordnung zum Unterdrücken von Echosignalen

Die Erfindung betrifft eine Schaltungsanordnung zum Unterdrücken von bei einer Duplex-Übertragung von aus einer Mehrzahl N aufeinanderfolgender Signalelemente gebildeten Digitalsignalen im Gleichlageverfahren über eine Zweidraht-Leitung auftretenden Echosignalen, mit einer Digitalsignale an die Zweidraht-Leitung abgebenden Sendeeinrichtung, einer Digitalsignale von der Zweidraht-Leitung aufnehmenden Empfangseinrichtung und mit einer für die Kompensation der in der Empfangseinrichtung zusammen mit den Digitalsignalen auftretenden Echosignale dienende Kompensationssignale abgebenden adaptiven Kompensatoranordnung, welche nach Maßgabe der ihr von der Sendeeinrichtung her zugeführten Digitalsignale die genannten Kompensationssignale an die Empfangseinrichtung abgibt und von dieser die durch die Kompensationssignale korrigierten Digitalsignale für eine adaptive Einstellung der Kompensationssignale zugeführt erhält.

Eine derartige Schaltungsanordnung ist beispielsweise aus der Zeitschrift " Philips Technische Rundschau", 39, 1980/81, Nr. 3, Seiten 82 bis 98 bekannt. Bei dieser bekannten Schaltungsanordnung ist die Kompensatoranordnung als adaptives Transversalfilter für die Kompensation von Echosignalen ausgebildet, die linear von den zu übertragenden Digitalsignalen abhängen. Im allgemeinen kann jedoch eine solche Linearität nur mit einem sehr großen schaltungstechnischen Aufwand gewährleistet werden.

Aus der Zeitschrift "IEEE Transactions on Communications", VOL. COM-30, Nr. 11, November 1982, Seiten 2421 bis 2433 sind bereits Kompensatoranordnungen für die Kompensation von nichtlinear von den zu übertragenden Digitalsignalen abhängigen Echosignalen bekannt. Eine erste Kompensatoranordnung arbeitet dabei nach einem sogenannten Speicherkompensations-Prinzip (memory compensation). Gemäß diesem Prinzip werden den möglichen Kombinationen von N aufeinanderfolgenden zu übertragenden Signalelementen entsprechende Kompensationssignale in einer Speicheranordnung gespeichert. Diese Speicheranordnung wird auf jede Übertragung eines Signalelementes hin angesteuert, um das dem jeweiligen Signalelement und den zuvor übertragenen (N-1) Signalelementen entsprechende Kompensationssignal bereitzustellen. Mit dieser Kompensatoranordnung sind zwar beliebige Nichtlinearitäten in den Echosignalen kompensierbar. Jedoch hängt die Einlaufzeit der Kompensatoranordnung von der Anzahl der insgesamt zu berücksichtigenden Kombinationen der genannten N aufeinanderfolgenden Signalelemente ab.

Bei einer zweiten Kompensatoranordnung wird von einem herkömmlichen linearen Echokompensator ausgegangen, beispielsweise einem Transversalfilter, und entsprechend der zu berücksichtigenden Nichtlinearitäten in den Echosignalen zusätzliche Kompensationsstufen angefügt. Diese Kompensatoranordnung hat nun zwar gegenüber der zuvorgenannten ersten Kompensatoranordnung ein günstigeres Einlaufverhalten. Jedoch wird das Einlaufverhalten des für die Kompensation der linearen Echosignalanteile dienenden Teiles der Kompesatoranordnung durch die zu berücksichtigenden Nichtlinearitäten beeinflußt. Damit bestimmen beispielsweise auch für den Fall, daß der Hauptanteil eines Echosignals durch die linearen Echosignalanteile gebildet ist, die Nichtlinearitäten das Einlaufverhalten der Kompensatoranordnung.

Es ist auch bereits eine weitere nichtlineare Kompensatoranordnung bekannt. Bei dieser Kompensatoranordnung liegt eine Reihenschaltung aus einem linearen Echokompensator und eines nichtlinearen Echokompensators vor. Durch diese Trennung ist das Einlaufverhalten des linearen Echokompensators weitgehend unabhängig von den zu berücksichtigenden Nichtlinearitäten in den Echosignalen.

Es ist nun Aufgabe der vorliegenden Erfindung, einen Weg zu zeigen, wie eine Schaltungsanordnung der eingangs genannten Art ausgebildet werden kann, um einerseits Echosignale mit nichtlinearen Echosignalanteilen wirksam zu kompensieren und andererseits ein günstiges Einlaufverhalten der Schaltungsanordnung zu erreichen.

Gelöst wird die vorstehend aufgezeigte Aufgabe bei einer Schaltungsanordnung der eingangs genannten Art erfindungsgemäß dadurch, daß in der adaptiven Kompensatoranordnung ein erster, von der Sendeeinrichtung her mit den zu übertragenden Digitalsignalen beaufschlagter und lediglich Kompensationssignale für die Kompensation der linear von den zu übertragenden Digitalsignalen abhängigen Echosignalanteile bereitstellender Echokompensator vorgesehen ist, daß in der adaptiven Kompensatoranordnung ferner ein zweiter, mit den von dem ersten Echokompensator bereitgestellten Kompensationssignalen beaufschlager Echokompensator und/oder ein dritter, von der Sendeeinrichtung mit den zu übertragenden Digitalsignalen beaufschlager Echokompensator vorgesehen sind bzw. ist, wobei der jeweilige zweite und/oder dritte Echokompensator lediglich Kompensationssignale für die Kompensation der nichtlinear von den zu übertragenden Digitalsignalen abhängigen Echosignalanteile bereitstellen bzw.

bereitstellt, daß eine Summiereinrichtung vorgesehen ist, welche die von den jeweils vorhandenen Echokompensatoren bereitgestellten Kompensationssignale aufnimmt und diesen entsprechende Summenkompensationssignale an die genannte Empfangseinrichtung abgibt, und daß die jeweils vorhandenen Echokompensatoren für ihre adaptive Einstellung gemeinsam von der Empfangseinrichtung her mit den mit Hilfe der Summenkompensationssignale korrigierten Digitalsignalen beaufschlagt sind.

Die Erfindung bringt einerseits den Vorteil mit sich, daß durch die Trennung von linearen und nichtlinearen Echokompensatoren das Einlaufverhalten des linearen Echokompensators, dessen von ihm bereitgestellten Kompensationssignale in der Regel den Hauptanteil der Echosignale kompensieren, weitgehend unabhängig ist von den in den Echosignalen auftretenden nichtlinearen Echosignalanteilen. Auf diese Weise kann durch Verwendung eines geeigneten linearen Echokompensators erreicht werden, daß bezüglich des Hauptanteiles der Echosignale die Kompensatoranordnung schnell ihren eingeschwungenen Zustand einnimmt, d.h. eine schnelle Grobeinstellung der Kompensationssignale erfolgt, während die Feineinstellung der Kompensationssignale in Abhängigkeit der in den Echosignalen auftretenden Nichtlinearitäten durchgeführt wird. Ein weiterer Vorteil der Erfindung besteht darin, daß je nach der Ursache und dem Entstehungsort der in den Echosignalen auftretenden Nichtlinearitäten ein oder mehrere voneinander unabhängige nichtlineare Echokompensatoren eingesetzt sind.

Für den Fall, daß die Sendeeinrichtung eine Nichtlinearitäten in den Echosignalen verursachende Sendeausgangsstufe aufweist, ist es zweckmäßig, an den Eingang dieser Sendeausgangsstufe den ersten Echokompensator und an den Ausgang den dritten Echokompensator anzuschließen. Auf diese Weise ist es möglich, mit Hilfe des dritten Echokompensators die in der Sendeausgangsstufe entstehenden Nichtlinearitäten zu unterdrücken. Dagegen kann beispielsweise mit Hilfe des dem ersten Echokompensator nachgeschalteten zweiten Echokompensators durch die Eingangsstufe (z. B. A/D-Wandler) der Empfangseinrichtung verursachte Nichtlinearitäten kompensiert werden.

Vorteilhafte Ausgestaltungen des zweiten bzw. dritten Echokompensators ergeben sich aus den Patentansprüchen 3 bis 7.

Im folgenden wird nun die vorliegende Erfindung anhand von Zeichnungen beispielsweise näher beschrieben.

FIG 1 zeigt eine Datenübertragungseinrichtung mit einer Kompensatoranordnung gemäß der vorliegenden Erfindung,

FIG 2 zeigt ein erstes Ausführungsbeispiel für einen nichtlinearen Echokompensator,

FIG 3 zeigt ein zweites Ausführungsbeispiel eines nichtlinearen Echokompensators,

FIG 4 zeigt ein drittes Ausführungsbeispiel eines nichtlinearen Echokompensators und

FIG 5 zeigt eine in dem nichtlinearen Echokompensator gemäß FIG 4 für die adaptive Einstellung von Kompensationssignalen-Koeffizienten verwendbare Schaltungsanordnung.

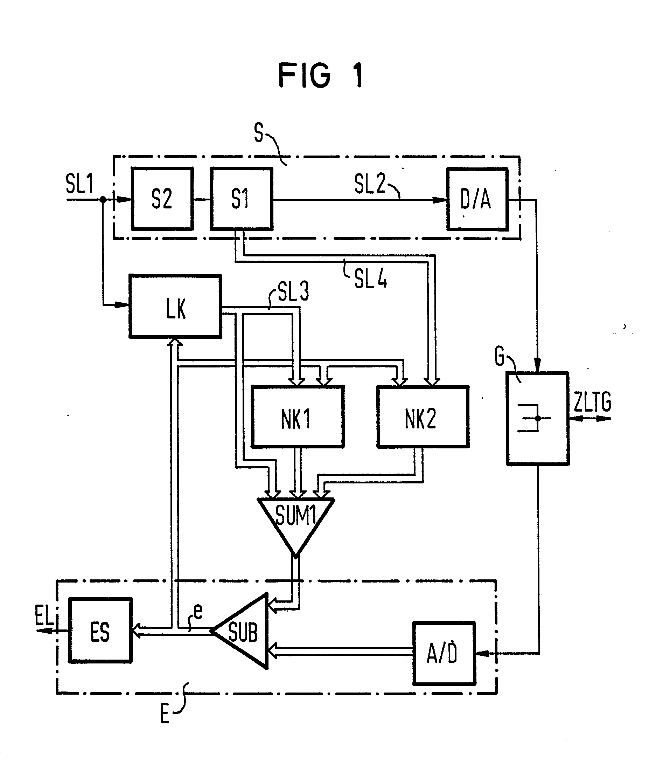

In FIG 1 ist ein Prinzipschaltbild einer Übertragungseinrichtung für die Übertragung von Digitalsignalen im Gleichlageverfahren über eine Zweidraht-Leitung ZLTG dargestellt. In dieses Prinzipschaltbild sind dabei lediglich die für das Verständnis der vorliegenden Erfindung erforderlichen Schaltungsteile aufgenommen. Bei den Digitalsignalen kann es sich um beliebige mehrstufige Signale handeln, wie z. B. Binärsignale oder die bei einer derartigen Übertragung häufig verwendeten pseudoternären Signale.

Die Übertragungseinrichtung weist eine Sendeinrichtung S auf, welche beispielsweise die von einer Datenendeinrichtung abgegebenen, auf einer Sendeleitung SL1 auftretenden Sendesignale in für die Übertragung über die Zweidraht-Leitung geeignete Digitalsignale umsetzt. Eine solche Umsetzung kann beispielsweise darin bestehen, daß von der Datenendeinrichtung abgegebene Binärsignale leistungsverstärkt und anschließend in analoge Digitalsignale umgewandelt werden. Hierfür weist die Sendeeinrichtung S eine mit S1 bezeichnete Sendeausgangsstufe auf, die über eine Leitung SL2 mit einem Digital-/Analog-Wandler D/A verbunden ist. Sind dagegen die von der Datenendeinrichtung abgegebenen Binärsignale als von den Binärsignalen abweichende mehrstufige Signale, beispielsweise als pseudoternäre Signale, zu übertragen, so kann der genannten Sendeausgangsstufe S1, wie in FIG 1 angedeutet, eine entsprechende Umsetzeinrichtung S2 vorgeschaltet sein.

Die am Ausgang des genannten Digital-/Analog-Wandlers auftretenden analogen Signale gelangen über eine Gabelanordnung G als Sendesignale auf die genannte Zweidraht-Leitung ZLTG. Gleichzeitig nimmt diese Gabelanordnung zu der in FIG 1 dargestellten Übertragungseinrichtung hin übertragene analoge Signale als Empfangssignale auf und leitet diese an eine Empfangseinrichtung E weiter. Dabei gibt die Gabelanordnung zusätzlich zu den Empfangssignalen an die Empfangseinrichtung noch als Echosignale bezeichnete Störsignale ab, welche bei der Abgabe von Sendesignalen entweder direkt in der Gabelanordnung durch eine nicht vollständige Entkopplung der Übertragungswege oder an Reflexionsstellen der Zweidraht-Leitung entstehen. Damit erhält die Empfangseinrichtung nicht nur die tatsächlichen Empfangssignale sondern ein aus diesen und den Echosignalen gebildetes Signalgemisch zugeführt.

Von der Empfangseinrichtung E sind in FIG 1 dargestellt ein Analog-/Digital-Wandler A/D, ein diesem nachgeschalteter Subtrahierer SUB und - schließlich eine mit dem Ausgang des Subtrahierers verbundene Empfangssteuerung ES. Der Analog-/Digital-Wandler entnimmt dabei dem ihm zugeführten Signalgemisch in vorgegebenen Zeitabständen Abtastproben und wandelt diese in den jeweiligen Abtastproben entsprechende codierte Bitgruppen um, die an parallelen Ausgängen des Analog/-Digital-Wandlers auftreten. Mit den einzelnen Bitgruppen, die immer noch in codierter Form Abtastproben des Signalgemisches darstellen, werden dann erste Eingänge des Subtrahierers SUB angesteuert. Weiteren Eingängen dieses Subtrahierers werden dabei gleichzeitig zu jeder Bitgruppe eine dem darin enthaltenen Echosignanteil entsprechende Bitgruppe als Kompensationssignal zugeführt, so daß am Ausgang des Subtrahierers Bitgruppen auftreten, die lediglich noch die den Empfangssignalen entsprechenden Signalanteile in codierter Form enthalten. Aus diesen Bitgruppen werden schließlich in der dem Subtrahierer nachgeschalteten Empfangssteuerung ES Binärsignale abgeleitet, die der bereits genannten Datenendeinrichtung über eine Empfangsleitung EL zugeführt werden.

Bei dem in FIG 1 dargestellten Ausführungsbeispiel wird davon ausgegangen, daß die genannten Bitgruppen innerhalb der Empfangseinrichtung E zwischen den genannten Schaltungsteilen über aus einer vorgegebenen Anzahl von parallelen Einzelleitungen bestehende Leitungssysteme übertragen werden und innerhalb der jeweiligen Schaltungsteile parallel behandelt werden. Demgegenüber wäre es jedoch auch möglich, die genannten Bitgruppen zwischen den einzelnen Schaltungsteilen der Empfangseinrichtung seriell zu übertragen und innerhalb der Schaltungsteile eine serielle Behandlung vorzunehmen.

Für die Erzeugung der zuvorgenannten Kompensationssignale weist die in FIG 1 dargestellte Übertragungseinrichtung eine Kompensatoranordnung auf. Diese Kompensatoranordnung besteht insgesamt aus drei gesonderten Echosignalkompensatoren. Ein erster mit LK bezeichneter Echokompensator ist mit der bereits genannten Leitung SL1 verbunden und bildet nach Maßgabe der über die Leitung SL1 übertragenen Digitalsignale (Sendesignale) lediglich linear von den übertragenen Signalen abhängige Kompensationssignale. Derartige Echokompensatoren und deren Wirkungsweise sind bereits bekannt, so daß auf diesen Echokompensator LK im folgenden nicht näher eingegangen wird. Bezüglich diese Echokompensators sei hier lediglich noch angemerkt, daß dieser bei dem vorliegenden Ausführungsbeispiel als Kompensationssignale jeweils eine bereits obengenannten Bitgruppe bildet und diese an ein aus einer Mehrzahl von parallelen Einzelleitungen bestehendes Leitungssystem SL3 abgibt.

An das Leitungssystem SL3 ist ein zweiter Echokompensator NK1 angeschlossen. Dieser Echokompensator leitet aus den ihm jeweils zugeführten Signalen, hier den Kompensationssignalen des ersten Echokompensators LK, Kompensationssignale für die Kompensation der nichtlinear von den zu übertragenden Sendesignalen abhängigen Echosignale ab.

Neben dem gerade genannten nichtlinearen Echokompensator NK1 ist noch ein zweiter nichtlinearer Echokompensator NK2 vorgesehen. Dieser Echokompensator ist über ein Leitungssystem SL4 mit einem Ausgang der bereits genannten Sendeausgangsstufe S1 der Sendeeinrichtung S verbunden und gibt wie der erste nichtlineare Echokompensator Kompensationssignale für die Kompensation der nichtlinear von den zu übertragenden Sendesignalen abhängigen Echosignale ab.

Die zuvor genannten drei Echokompensatoren ·geben jeweils die von ihnen gebildeten Kompensationssignale in paralleler Form über ein Leitungssystem an einen mit SUM1 bezeichneten Summierer ab, der aus den einzelnen Kompensationssignalen ein Summenkompensationssignal bildet und dieses dem bereits genannten Subtrahierer SUB der Empfangseinrichtung E zuführt.

Durch die aus dem linearen Echokompensator LK und dem nichtlinearen Echokompensator NK1 bestehende Reihenschaltung können beispielsweise neben den linearen Echosignalanteilen auch nichtlineare, durch Eingangsstufen der Empfangseinrichtung E, wie z. B. durch den in FIG 1 dargestellten Analog-/Digital-Wandler A/D, hervorgerufene nichtlineare Echosignalanteile kompensiert werden. Dagegen ermöglicht der nichtlineare Echokompensator NK2 die Kompensation von nichtlinearen Echosignalanteilen, die durch die Sendeausgangsstufe S1 der Sendeeinrichtung S hervorgerufen werden. Entgegen dem in FIG 1 dargestellten Ausführungsbeispiel können die aus dem linearen Echokompensator LK und dem nichtlinearen Echokompensator NK1 bestehende Reihenschaltung und der nichtlineare Echokompensator NK2 auch je nach dem Entstehungsort von nichtlinearen Echosignalanteilen mit anderen Schaltungsteilen der Sendeeinrichtung S verbunden sein. Darüber hinaus ist es auch möglich, lediglich einen der beiden nichtlinearen Echokompensatoren einzusetzen, beispielsweise den nichtlinearen Echokompensator NK1, wenn die auftretenden nichtlinearen Echosignalanteile von den Eingangsstufen der Empfangseinrichtung herrühren. Dagegen ist für den Fall, daß nichtlineare Echosignalanteile lediglich durch die Sendeausgangsstufe S1 der Sendeeinrichtung S hervorgerufen werden, nur der nichtlineare Echokompensator NK2 erforderlich.

Die drei zuvorgenannten Echokompensatoren sind hinsichtlich der Abgabe von Kompensationssignalen adaptiv einstellbar. Dafür erhalten sie die bereits genannten, am Ausgang des Subtrahierers SUB auftretenden Bitgruppen zugeführt. Das für diese Zuführung benutzte Leitungssystem ist in FIG 1 mit e bezeichnet.

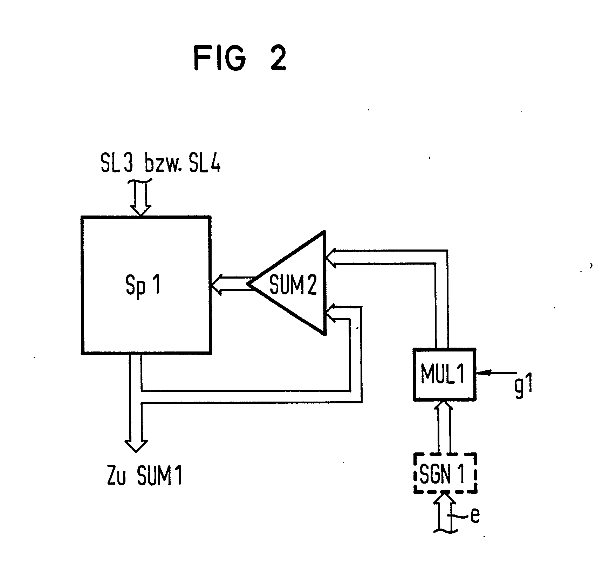

Wie bereits vorstehend angedeutet, sind lineare Echokompensatoren hinlänglich bekannt, so daß im weiteren auf den linearen Echokompensator LK nicht näher eingegangen wird. Dagegen werden im weiteren drei Ausführungsbeispiele für nichtlineare Echokompensatoren näher erläutert. Dabei wird bei allen Ausführungsbeispielen davon ausgegangen, daß als Sendesignale Binärsignale übertragen werden und daß in der Sendeausgangsstufe S1 der Sendeeinrichtung S ein Serien-Parallel-Umsetzer, beispielsweise in Form eines Schieberegisters mit parallelen Ausgängen vorgesehen ist, welcher auf jede Übertragung eines Bits der Binärsignale eine aus diesem und den (N-1) zuvor übertragenen Bits eine aus N-Bits bestehende Bitgruppe bildet. Außerdem möge auch der lineare Echokompensator LK auf jede Übertragung eines Bits hin ein aus N-Bits bestehendes Kompensationssignal bereitstellen. In FIG 2 ist ein erstes Ausführungsbeispiel eines nichtlinearen Echokompensators dargestellt. Dieser Echokompensator weist in Anlehnung an die bekannte Speichermethode eine Speicheranordnung mit einer Vielzahl von Speicherplätzen auf, in welchen den möglichen Kombinationen der von der Sendeausgangsstufe S1 bzw. von dem linearen Echokompensator LK bereitgestellten Bitgruppen zugeordnete, lediglich nichtlinear von den zu übertragenden Sendesignalen abhängige Kompensationssignale in Form von Bitgruppen gespeichert sind. Darin liegt der Unterschied zur bekannten Speichermethode, bei der in den abgespeicherten Kompensationssignalen auch die linear von den zu übertragenden Sendesignalen abhängigen Echosignalanteile berücksichtigt sind.

Die dem Echokompensator zugeführten Bitgruppen dienen der Speicheranordnung SP1 als Adressensignale, indem mit diesen jeweils für eine Kompensationssignal-Abgabe an den Summierer SUM1 derjenige Speicherplatz angesteuert wird, der das der jeweils vorliegenden Bitgruppe zugeordnete Kompensationssignal enthält.

Der in FIG 2 dargestellte Echokompensator weist eine Schaltungsanordnung für die adaptive Einstellung der einzelnen, in der Speicheranordnung SP1 gespeicherten Kompensationssignale auf. Diese Schaltungsanordnung nimmt die adaptive Einstellung nach der Vorschrift

$$y_I(neu) = Y_I(alt) + g1.e$$

vor. Dabei bedeuten $y_I$ das jeweils einzustellende Kompensationssignal, g1 eine Konstante, die das Einlaufverhalten des Echokompensators und den Restfehler der Echokompensation bestimmt, und e die am Ausgang des in FIG 1 dargestellten Subtrahierers SUB auftretende Bitgruppe.

Die zuvor angegebene Einstellvorschrift wird durch einen Summierer SUM2 erfüllt, dem einerseits das gerade von der Speicheranordnung SP1 bereitgestellte Kompensationssignal und andererseits eine in einem Multiplizierer MUL1 mit der genannten Konstan ten g1 multipliziertes, am Ausgang des Subtrahierers SUB gerade auftretende Bitgruppe zugeführt ist. Am Ausgang dieses Summierers tritt das aktualisierte Kompensationssignal auf, das in denjenigen Speicherplatz der Speicheranordnung SP1 unter Überschreiben des bisher darin gespeicherten Kompensationssignals eingetragen wird, der durch die der Speicheranordnung SP1 gerade zugeführte Bitgruppe angesteuert wird. Abweichend von der zuvor angegebenen Einstellvorschrift kann für die adaptive Einstellung anstelle der dem Multiplizierer MUL1 zugeführten Bitgruppe auch lediglich deren Vorzeichen berücksichtigt werden. In diesem Fall kann beispielsweise dem Multiplizierer MUL1 eine in FIG 2 mit SGN1 bezeichnete Schaltungsanordnung zur Vorzeichenermittlung vorgeschaltet sein.

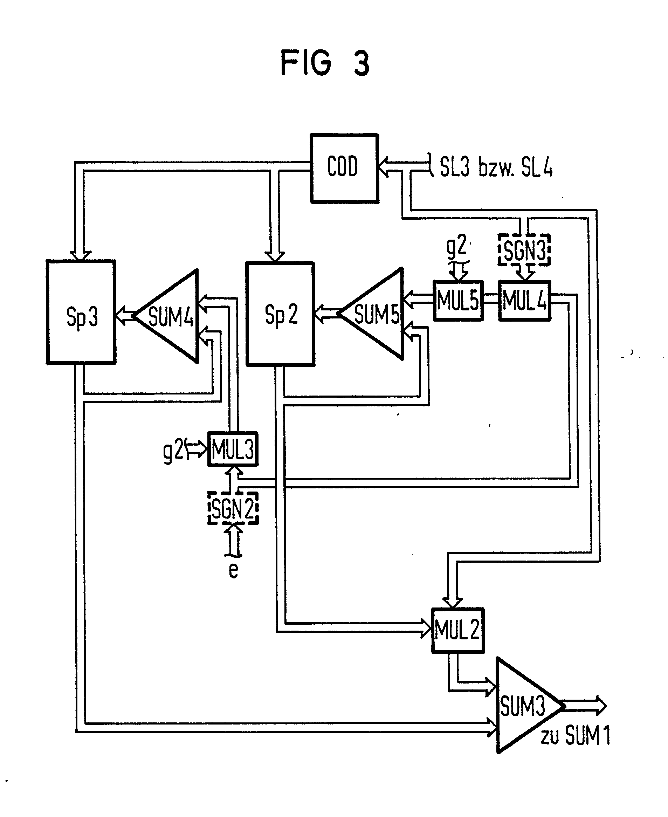

In FIG 3 ist ein zweites Ausführungsbeispiel für einen nichtlinearen Echokompensator dargestellt. Bei diesem Echokompensator wird die zu realisierende nichtlineare Umsetzkennlinie durch eine vorgegebene Anzahl M stückweiser linearer Segmente angenähert, indem die dem Echokompensator zugeführten Bitgruppen jeweils entsprechend einer durch festgelegte Bits gebildeten Bitkombination einem der vorgegebenen Segmente zugeordnet werden. Für jedes dieser Segmente wird ein Kompensationssignal y der Form

$$y = a_i X + bi$$

gebildet. Dabei bedeuten X die dem Echokompensator gerade zugeführte Bitgruppe und $a_I$, $b_I$ ein Kompensationssignal-Koeffizienten-Paar, welches innerhalb des der gerade vorliegenden Bitgruppe X zugeordneten Segmentes zu verwenden ist.

Der in FIG 3 dargestellte nichtlineare Echokompensator weist für die Bildung der genannten Kompensationssignale eine Codiereinrichtung COD auf. Diese Codiereinrichtung nimmt eine Einordnung der ihr zugeführten Bitgruppen in die M vorgegebenen linearen Segmente der Umsetzkennlinie vor, indem sie die in den Bitgruppen jeweils enthaltenen Bitkombinationen als dualcodierte Werte bewertet und diese einem der vorgegebenen M Segmente durch Abgabe eines entsprechenden Adressensignals zuordnet. Dies kann beispielsweise dadurch erfolgen, daß für die Anzahl der linearen Segmente eine 2-er Potenz gewählt wird und daß die Codiereinrichtung COD von den ihr jeweils zugeführten Bitgruppen lediglich eine der Anzahl der M Segmente entsprechende Anzahl von höherwertigen Bits als Adressensignal bereitstellt. So können z. B. durch die drei höchstwertigen Bits der der Codiereinrichtung zugeführten Bitgruppen insgesamt acht lineare Segmente festgelegt werden.

Die von der Codiereinrichtung COD abgegebenen Adressensignale erhält eine Speicheranordnung zugeführt. Diese Speicheranordnung weist zwei gesonderte, in FIG 3 mit SP2 und SP3 bezeichnete Speicherbereiche auf. Jedem dieser Speicherbereiche ist dabei eine der Anzahl M linearer Segmente entsprechende Anzahl von Speicherplätzen zugehörig. In den Speicherplätzen des Speicherbereiches SP2 sind dabei die Kompensationssignal-Koeffizienten $a_i$ , in den Speicherplätzen des Speicherbereiches SP3 dagegen die Kompensationssignal-Koeffizienten $b_i$ gespeichert.

Mit jeder Zuführung eines Adressensignals treten an den Ausgängen der beiden Speicherbereiche ein dem jeweiligen Adressensignal zugeordnetes Kompensationssignal-Koeffizienten-Paar auf. Der Kompensationssignal-Koeffizient $a_i$ wird dabei einem Multiplizierer MUL2 zugeführt, der diesen Kompensationssignal-Koeffizienten mit der der Codiereinrichtung COD gerade zugeführten Bitgruppe multipliziert. Mit einem daraus resultierenden Produktsignal werden schließlich erste Eingänge eines Summierers SUM 3 beaufschlagt, der gleichzeitig an zweiten Eingängen den am Ausgang des Speicherbereiches SP3 auftretenden Kompensationssignal-Koeffizienten $b_i$ aufnimmt. Dieser Summierer bildet aus den ihm zugeführten Eingangssignalen ein Summensignal und gibt dieses als Kompensationssignal an den in FIG 1 mit SUM1 bezeichneten Summierer ab.

Der in FIG 3 dargestellte Echokmompensator weist eine Schaltungsanordnung für die adaptive Einstellung der einzelnen, in den Speicherbereichen SP2 und SP3 gespeicherten Kompensationssignal-Koeffizienten-Paare auf. Diese Schaltungsanordnung stellt diese Koeffizienten-Paare nach der Vorschrift

$a_i$ (neu) = $a_i$ (alt) + g2eX

$b_i$ (neu) = $b_i$ (alt) + g2e

ein. Dabei bedeuten $a_i$ , $b_i$ das jeweils einzustellende Kompensationssignal-Koeffizienten-Paar, g2 eine das Einlaufverhalten des Echokompensators und den Restfehler der Echokompensation beeinflussende Konstante, e die am Ausgang des in FIG 1 dargestellten Subtrahierers SUB auftretende Bitgruppe und X die der Codiereinrichtung COD gerade zugeführte Bitgruppe.

Gemäß der obenangegebenen Einstellvorschrift ist für die Einstellung des Kompensationssignal-Koeffizienten $b_i$ ein Summierer SUM4 vorgesehen, dem einerseits der gerade am Ausgang des Speicherbereiches SP3 auftretende Kompensationssignal-Koeffizient $b_i$ und andererseits die in einem Multiplizierer MUL3 mit der Konstanten g2 multiplizierte, am Ausgang des in FIG 1 dargestellten Subtrahierers SUB gerade auftretende Bitgruppe zugeführt ist. Am Ausgang dieses Summierers tritt der aktualisierte Kompensationssignal-Koeffizient $b_i$ auf. Dieser wird in denjenigen Speicherplatz des Speicherbereiches SP3 übertragen, welcher durch das dem Speicherbereich SP3 zugeführte Adressensignal angesteuert ist. Dabei wird der bisher in diesem Speicherplatz gespeicherte Kompensationssignal-Koeffizient überschrieben.

Für die Einstellung der in dem Speicherbereich SP2 gespeicherten Kompensationssignal-Koeffizienten $a_i$ ist ein Summierer SUM5 vorgesehen, der einerseits den gerade am Ausgang des Speicherberei ches SP2 auftretenden Kompensationssignal-Koeffizienten und andererseits von einer Multipliziereinrichtung her ein Produktsignal zugeführt erhält. Diese Multipliziereinrichtung besteht aus einem ersten Multiplizierer MUL4, der die am Ausgang des in FIG 1 dargestellten Subtrahierers SUB auftretende Bitgruppe mit der der Codiereinrichtung COD zugeführten Bitgruppe multipliziert und das daraus resultierende Produktsignal einem weiteren Multiplizierer MUL5 zuführt, der dieses Produktsignal mit der bereits genannten Konstanten g2 multipliziert und das daraus resultierende Produktsignal an den bereits genannten Summierer SUM5 abgibt.

Im übrigen sei noch darauf hingewiesen, daß die Schaltungsanordnung für die Einstellung der Kompensationssignal-Koeffizienten-Paare auch derart ausgebildet sein kann, daß für die Aktualisierung der einzelnen Kompensationssignal-Koeffizienten-Paare nicht die am Ausgang des Subtrahierers SUB bzw. am Eingang der Codiereinrichtung COD auftretenden Bitgruppen, sondern lediglich deren Vorzeichen berücksichtigt werden. In diesem Falle werden die genannten Bitgruppen den Multiplizierern MUL3 und MUL4 über jeweils eine Schaltungsanordnung zur Vorzeichenermittlung zugeführt. Diese Schaltungsanordnungen sind in FIG 3 mit SGN2 und SGN3 bezeichnet.

Der in FIG 3 dargestellte nichtlineare Echokompensator hat den Vorteil, daß lediglich eine der obengenannten Anzahl M von linearen Segmenten entsprechende Anzahl von Kompensationssignal-Koeffizienten-Paaren in den Speicherbereichen SP2 und SP3 zu speichern sind und für die Bildung von Kompensationssignalen lediglich zwei arithmetische Operationen, nämlich eine Multiplikation und eine Addition, erforderlich sind.

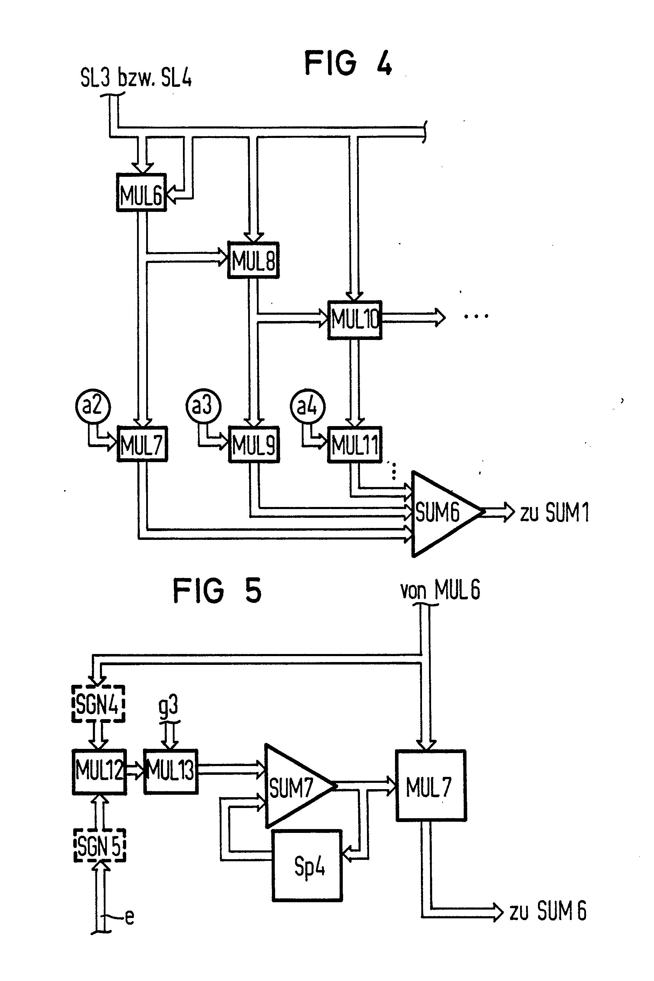

In FIG 4 ist schließlich noch ein weiteres Ausführungsbeispiel eines nichtlinearen Echokompensators dargestellt. Dieser Echokompensator bildet aus den ihm zugeführten Bitgruppen jeweils ein Kompensationssignal y der Form

$$y = a_2 . X^2 + a_3 . X^3 + ... + a_N . X^N$$

Dabei bedeuten $a_2, ..., a_N$ dem Echokompensator zur Verfügung stehende Kompensationssignal-Koeffizienten und X die dem Echokompensator zugeführte Bitgruppe. Für die Bildung derartiger Kompensationssignale weist der Echokompensator eine Anzahl der in den Kompensationssignalen enthaltenen Teilsignale (Summanden) entsprechende Anzahl von gesonderten Multipliziereinrichtungen auf. In FIG 4 sind dabei lediglich die Multipliziereinrichtungen für die ersten drei Teilsignale, d. h. für die ersten drei Summanden, dargestellt. Jede dieser Multipliziereinrichtungen weist zwei in Reihe geschaltete Multiplizierer auf. Die dem ersten Teilsignal zugeordneten Multiplizierer sind mit MUL6 und MUL7 bezeichnet. In entsprechender Weise sind die dem zweiten bzw. dritten Teilsignal zugeordneten Multiplizierer mit MUL8 und MUL9 bzw. MUL10 und MUL11 bezeichnet.

Der erste Multiplizierer jeder der Reihenschaltungen dient für die Bildung der in Frage kommenden Potenz der dem Echokompensator gerade zugeführten Bitgruppe X. Dafür erhält der dem ersten Teilsignal zugeordnete Multiplizierer MUL6 an ersten und zweiten Eingängen die dem Echokompensator gerade zugeführte Bitgruppe zugeführt, d. h. er bildet $X^2$. Die den übrigen Teilsignalen zugeordneten ersten Multiplizierer übernehmen dagegen an ersten Eingängen die jeweilige Bitgruppe und an zweiten Eingängen das Ausgangssignal des dem jeweiligen Teilsignal vorangehenden Teilsignal zugeordneten ersten Multiplizierers. So übernimmt beispielsweise der Multiplizierer MUL8 die Bitgruppe X und multipliziert diese mit dem am Ausgang des Multiplizierers MUL6 auftretenden Signal $X^2$, um auf diese Weise ein Signal $X^3$ zu bilden.

Das an dem jeweils ersten Multiplizierer der einzelnen Multipliziereinrichtungen auftretende Ausgangssignal wird dem jeweils zugehörigen zweiten Multiplizierer zugeführt, der dieses Signal mit einem dem jeweiligen Teilsignal zugeordneten Kompensationssignal-Koeffizienten multipliziert, für das erste Teilsignal also mit $a_2$, für das zweite Teilsignal mit $a_3$ usw.. Den genannten Multipliziereinrichtungen ist ein Summierer SUM6 nachgeschaltet, der die an den Ausgängen der Multipliziereinrichtungen auftretenden Teilsignale zu einem Kompensationssignal der angegebenen Form zusammenfaßt und dieses an den in FIG 1 dargestellten Summierer SUM1 weiterleitet.

Jeder der in FIG 4 dargestellten Multipliziereinrichtungen ist eine gesonderte Schaltungsanordnung für die adaptive Einstellung des jeweils in Frage kommenden Kompensationssignal-Koeffizienten zugeordnet. Jede dieser Schaltungsanordnungen nimmt dabei eine Einstellung in der Form

$$a_i(neu) = a_i (alt) + g3.e.X^i$$

vor. Hierbei bedeuten $a_i$ den jeweils einzustellenden Kompensationssignal-Koeffizienten, g3 eine Konstante, e die am Ausgang des in FIG 1 dargestellten Subtrahierers SUB auftretende Bitgruppe und X die dem in FIG 4 dargestellten Echokompensator zugeführte Bitgruppe dar. Eine für eine derartige adaptive Einstellung geeignete Schaltungsanordnung ist in FIG 5 am Beispiel des Kompensationssignal-Koeffizienten a° wiedergegeben. Diese Schaltungsanordnung weist zwei in Reihe geschaltete Multiplizierer MUL12 und MUL13 auf, wobei der Multiplizierer MUL12 das Ausgangssignal $(X^2)$ des Multiplizierers MUL6 gemäß Fig 4 mit der am Ausgang des in FIG 1 dargestellten Subtrahierers SUB auftretenden Bitgruppe multipliziert und das daraus resultierende Produktsignal dem Multiplizierer MUL13 zuführt. Dieser Multiplizierer bildet das Produkt aus der genannten Konstanten g3 und dem ihm zugeführten Produktsignal und gibt das daraus wiederum resultierende Produktsignal an erste Eingänge eines Summierers SUM7 ab. An zweiten Eingängen wird dieser Summierer mit dem in einer Speicheranordnung SP4, beispielsweise in einer Registerzelle, gespeicherten Kompensationssignal-Koeffizienten $a_2$ (alt) beaufschlagt. Am Ausgang dieses Summierers tritt der aktualisierte Kompensationssignal-Koeffizient $a_2$ (neu) auf, der einerseits dem Multiplizierer MUL7 zugeführt und andererseits in die Speicheranordnung SP4 unter Überschreiben des bisher darin gespeicherten Kompensationssignal-Koeffizienten ($a_2$(alt)) übernommen wird.

Auch die in FIG 5 dargestellte Schaltungsanordnung kann abweichend von den bisherigen Ausführungen derart ausgebildet sein, daß der Multiplizierer MUL12 für die Aktualisierung des Kompensationssignal-Koeffizienten $a_2$ anstelle der zuvor genannten Eingangssignale lediglich deren Vorzeichen angebende Signale zugeführt erhält. In diesem Falle ist den Eingängen dieses Multiplizierers jeweils eine Schaltungsanordnung zur Vorzeichenermittlung vorgeschaltet. Die betreffenden Schaltungsanordnungen sind in FIG 5 mit SGN4 und SGN5 bezeichnet.

Der in den FIGUREN 4 und 5 dargestellte nichtlineare Echokompensator eignet sich insbesondere für die Bildung von Kompensationssignalen mit einer geringen Anzahl von vorstehend genannten Teilsignalen, da damit der schaltungstechnische Aufwand für die erforderlichen Multipliziereinrichtungen entsprechend niedrig gehalten werden kann.

Bezüglich der anhand der FIGUREN 3, 4 und 5 erläuterten Echokompensatoren sei darauf hingewiesen, daß die von diesen vorzunehmenden arithmetischen Verknüpfungen auch mit Hilfe eines den Echokompensatoren jeweils zugehörigen Mikroprozessorsystems durchgeführt werden können.

Außerdem sei noch darauf hingewiesen, daß zwar für die Erläuterung der in den FIGUREN 2 bis 5 dargestellten Echokompensatoren lediglich der Fall betrachtet wurde, daß in der in FIG 1 dargestellten Sendeeinrichtung S Sendesignale in Form von Binärsignalen auftreten und damit die Echokompensatoren diese Binärsignale als Eingangssignale zugeführt erhalten. Die Echokompensatoren können jedoch an beliebige in Form von mehrstufigen Digitalsignalen auftretende Sendesignale angepaßt werden, indem ihnen beispielsweise jeweils eine Kodiereinrichtung vorgeschaltet ist, die eine Umsetzung der in der Sendeeinrichtung auftretenden Sendesignale in Binärsignale vornimmt und anschließend diese Binärsignale für die Bildung von Kompensationssignalen herangezogen werden. Darüber hinaus wäre es auch möglich, die anhand der FIGUREN 2 bis 5 beschriebenen Schaltungsteile der Echokompensatoren derart auszulegen, daß die zu bildenden Kompensationssignale direkt, d .h. ohne vorherige Umsetzung, aus den in der Sendeeinrichtung S (FIG 1) auftretenden mehrstufigen Digitalsignalen abgeleitet werden können.

**Ansprüche**

1. Schaltungsanordnung zum Unterdrücken von bei einer Duplex-Übertragung von aus einer Mehrzahl N aufeinanderfolgender Signalelemente gebildeten Digitalsignalen im Gleichlageverfahren über eine Zweidraht-Leitung auftretenden Echosignalen, mit einer Digitalsignale an die Zweidraht-Leitung abgebenden Sendeeinrichtung (S), einer Digitalsignale von der Zweidraht-Leitung aufnehmenden Empfangseinrichtung (E) und mit einer für die Kompensation der in der Empfangseinrichtung zusammen mit den Digitalsignalen auftretenden Echosignale dienende Kompensationssignale abgebenden adaptiven Kompensatoranordnung (LK, NK1, NK2, SUM1), welche nach Maßgabe der ihr von der Sendeeinrichtung her zugeführten Signale die genannten Kompensationssignale an die Empfangseinrichtung abgibt und von dieser die durch die Kompensationssignale korrigierten Digitalsignale für eine adaptive Einstellung der Kompensationssignale zugeführt erhält, **dadurch gekennzeichnet**, daß in der adaptiven Kompensatoranordnung ein erster, von der Sendeeinrichtung (S) her mit den zu übertragenden Digitalsignalen beaufschlagter und lediglich Kompensationssignale für die Kompensation der linear von den zu übertragenden Digitalsignalen abhängigen Echosignalanteile bereitstellender Echokompensator (LK) vorgesehen ist,

daß in der adaptiven Kompensatoranordnung ferner ein zweiter, mit den von dem ersten Echokompensator (LK) bereitgestellten Kompensationssignalen beaufschlagter Echokompensator (NK1) und/oder ein dritter, von der Sendeeinrichtung (S) mit den zu übertragenden Digitalsignalen beaufschlagter Echokompensator (NK2) vorgesehen sind bzw. ist, wobei der jeweilige zweite und/oder dritte Echokompensator lediglich Kompensationssignale für die Kompensation der nichtlinear von den zu übertragenden Digitalsignalen abhängigen Echosignalanteile bereitstellen bzw. bereitstellt,

daß eine Summiereinrichtung (SUM1) vorgesehen ist, welche die von den jeweils vorhandenen Echokompensatoren (LK, NK1, NK2) bereitgestellten Kompensationssignale aufnimmt und diesen entsprechende Summenkompensationssignale an die genannte Empfangseinrichtung (E) abgibt,

und daß die jeweils vorhandenen Echokompensatoren für ihre adaptive Einstellung gemeinsam von der Empfangseinrichtung her mit den mit Hilfe der Summenkompensationssignale korrigierten Digitalsignalen beaufschlagt sind.

2. Schaltungsanordnung nach Anspruch 1, **dadurch gekennzeichnet**, daß die Sendeeinrichtung (S) eine Sendeausgangsstufe aufweist, an deren Eingang der erste Echokompensator (LK) und an deren Ausgang der dritte Echokompensator (NK2) angeschlossen ist.

3. Schaltungsanordnung nach Anspruch 1 oder 2, **dadurch gekennzeichnet**, daß der zweite bzw. dritte Echokompensator (NK1 bzw. NK2) eine Speicheranordnung (SP1) mit einer Vielzahl von Speicherplätzen aufweist, in welchen den möglichen Kombinationen von linearen Kompensationssignalen bzw. den möglichen Kombinationen einer vorgegebenen Anzahl N aufeinanderfolgender Signalelemente der zu übertragenden Digitalsignale zugeordnete nichtlineare Kompensationssignale gespeichert sind,

daß der zweite bzw. dritte Echokompensator auf jede Übertragung eines Signalelementes hin das diesem zugeordnete lineare Kompensationssignal bzw. die durch das übertragene Signalelement und die (N-1) zuvor übertragenen Signalelemente gebildete Signalelemente-Kombination als Adressensignal zugeführt erhält,

das denjenigen Speicherplatz der Speicheranordnung (SP1) bezeichnet, welcher das dem gerade vorliegenden linearen Kompensationssignal bzw. das der gerade vorliegenden Signalelemente-Kombination zugeordnete nichtlineare Kompensationssignal enthält,

und daß eine Steuereinrichtung (SUM2, MU1) für die adaptive Einstellung von Kompensationssignalen vorgesehen ist, welche auf jede Ansteuerung der Speicheranordnung (SP1) hin das von der Speicheranordnung gerade bereitgestellte Kompensationssignal nach Maßgabe des in der Empfangseinrichtung (E) auftretenden, durch das jeweilige von der Kompensatoranordnung (LK, NK1, NK2) angegebene Summenkompensationssignal korrigierten Digitalsignals aktualisiert und das aktualisierte nichtlineare Kompensationssignal in den gerade angesteuerten Speicherplatz der Speicheranordnung (SP1) überträgt.

4. Schaltungsanordnung nach Anspruch 1 oder 2, **dadurch gekennzeichnet,**
daß der zweite bzw. dritte Echokompensator (NK1 bzw.NK2) eine Codiereinrichtung (COD) aufweist, welche auf jede Übertragung eines Signalelementes hin anhand von festgelegten Kompensationssignalelementen des dem jeweiligen Signalelement zugeordneten, von dem ersten Echokompensator (LK) bereitgestellten linearen Kompensationssignals bzw. anhand von festgelegten Signalelementen der aus dem jeweiligen Signalelement und den (N-1) zuvor übertragenen, aufeinanderfolgenden Signalelementen gebildeten Signalelemente-Kombination ein Segment der Umsetzkennlinie auswählt und ein das jeweilige Segment bezeichnendes Adressensignal bereitstellt,
daß ein Kompensationssignal-Generator (SP2, SP3, MUL2, SUM3) vorgesehen ist, welcher auf das Bereitstellen eines Adressensignals hin ein Kompensationssignal y der Form y = $a_i X + b_i$ abgibt, wobei X das gerade vorliegende lineare Kompensationssignal bzw. die gerade vorliegende Signalelemente-Kombination und $a_i$, $b_i$ ein dem jeweils ausgewählten Segment zugeordnetes, in einer Speicheranordnung (SP2, SP3) des Kompensationssignal-Generators gespeichertes Kompensationssignal-Koeffizienten-Paar darstellen, und daß eine Steuereinrichtung (SUM4, MUL3; SUM5, MUL4, MUL5) für die adaptive Einstellung der Kompensationssignal-Koeffizienten-Paare vorgesehen ist, welche auf jede Entnahme eines Kompensationssignal-Koeffizienten-Paares aus der Speicheranordnung hin den zu diesem Kompensations-Koeffizienten-Paar gehörenden Kompensations-Koeffizienten $b_i$ nach Maßgabe des durch das von der Kompensatoranordnung (LK, NK1, NK2) abgegebene Summenkompensationssignal korrigierten Digitalsignals und den Kompensationssignal-Koeffizienten $a_i$ nach Maßgabe des gerade genannten Digitalsignals und des vorliegenden linearen Kompensationssignals bzw. der vorliegenden Signalelemente-Kombination aktualisiert und das aktualisierte Kompensationssignal-Koeffizienten-Paar in die Speicheranordnung (SP2, SP3) überträgt.

5. Schaltungsanordnung nach Anspruch 4, **dadurch gekennzeichnet,**
daß die Speicheranordnung (SP2, SP3) des Kompensationssignal-Generators zwei gesonderte Speicherbereiche aufweist, deren jeweilige in einer Mehrzahl vorhandene Speicherplätze durch von der Codiereinrichtung (COD) her bereitgestellte Adressensignale ansteuerbar sind,
daß in dem ersten Speicherbereich (SP2) die den einzelnen Kompensationsgruppen zugeordneten Kompensationssignal-Koeffizienten $a_i$ und in dem zweiten Speicherbereich (SP3) die Kompensationssignal-Koeffizienten $b_i$ gespeichert sind,
daß der bei Auftreten eines Adressensignals jeweils am Ausgang des ersten Speicherbereiches auftretende Kompensationssignal-Koeffizient $a_i$ zusammen mit dem dem jeweiligen Adressensignal entsprechenden linearen Kompensationssignal bzw. der dem jeweiligen Adressensignal entsprechenden Signalelemente-Kombination X einem Multiplizierer (MUL2) zugeführt ist und daß ein Summierer (SUM3) aus dem von dem Multiplizierer abgegebenen Produktsignal und dem am Ausgang des zweiten Speicherbereiches auftretenden Kompensationssignal-Koeffizienten $b_i$ ein das nichtlineare Kompensationssignal darstellendes Summensignal bildet.

6. Schaltungsanordnung nach Anspruch 5, **dadurch ge kennzeichnet,** daß die Sendeeinrichtung (S) bzw. der erste Echokompensator (LK) als Digitalsignale bzw. lineare Kompensationssignale eine vorgegebene Anzahl von Binärelementen abgibt
und daß die Codiereinrichtung (COD) auf jede Übertragung eines Binärelementes hin von der ihr zugeführten Binärelemente-Kombination eine der Anzahl der Segmente der Umsetzkennlinie entsprechende Anzahl von höherwertigen Binärelementen als Adressensignal bereitstellt.

7. Schaltungsanordnung nach Anspruch 1 oder 2, **dadurch gekennzeichnet,**
daß der zweite bzw. dritte Echokompesator (NK1 bzw. NK2) einen Kompensationssignal-Generator (MUL6,..., MUL11, SUM6) aufweist, welcher auf jede Übertragung eines Signalelementes hin eine aus dem diesem Signalelement zugeordneten linearen Kompensationssignal bzw. aus dem jeweiligen Signalelement und den (N-1) zuvor übertragenen Signalelemente gebildete Signalelemente-Kombination von dem ersten Echokompensator bzw. von der Sendeeinrichtung zugeführt erhält und welcher für jede ihm zugeführte Signalelemente-Kombination ein Kompensationssignal y der Form y = $a_2 X^2 + ... + a_N X^N$ bildet, wobei $a_2$, ..., $a_N$ dem Kompensationssignal-Generator zur Verfügung stehende Kompensationssignal-Koeffizienten und X die jeweilige Signalelemente-Kombination darstellen,

daß der Kompensationssignal-Generator eine der angegebenen Anzahl der in den Kompensationssignalen jeweils enthaltenen Teilsignale entsprechende Anzahl von gesonderten Multipliziereinrichtungen (MUL6, MUL7;...;MUL10, MUL11) aufweist, welche jeweils das von ihnen gebildete Teilsignal einer Summiereinrichtung (SUM6) zuführen,

und daß jeder Multipliziereinrichtung eine Steuereinrichtung (SP4, SUM7, MUL12, MUL13) für die adaptive Einstellung des jeweils in Frage kommenden Kompensationssignal-Koeffizienten zugeordnet ist, welche auf jede Bildung eines nichtlinearen Kompensationssignals hin den jeweiligen Kompensationssignal-Koeffizienten nach Maßgabe des in der Empfangseinrichtung auftretenden, durch das von der Kompensatoranordnung (LK, NK1, NK2) abgegebene Summenkompensationssignal korrigierten Digitalsignals und der gerade vorliegenden Signalelemente-Kombination aktualisiert.

# FIG 1

# FIG 2

SL3 bzw. SL4

Sp 1

SUM 2

MUL 1 ← g1

Zu SUM 1

SGN 1

e

# FIG 3

FIG 4

FIG 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | EP-A-0 203 726  (BRITISH TELECOM)<br>* Seite 6, Zeile 23 - Seite 7, Zeile 2; Figur 1 *<br>--- | 1,3 | H 04 B    3/23 |
| Y | EP-A-0 152 172  (BRITISH TELECOM)<br>* Seite 1, Zeile 26 - Seite 2, Zeile 5; Seite 4, Zeilen 14-27; Figuren 2,3 *<br>--- | 1,3 | |
| Y | IEEE TRANSACTIONS ON COMMUNICATIONS, Band COM-29, Nr. 11, November 1981, Seiten 1573-1581, IEEE, New York, US; N. HOLTE et al.: "A new digital echo canceler for two-wire subscriber lines"<br>* Seite 1574-1575, Absatz III; Figur 4 *<br>--- | 3 | |
| A | WO-A-8 301 715  (ERICSSON)<br>* Seite 3, Zeile 25 - Seite 4, Zeile 15; Seite 8, Zeilen 4-7; Figuren 2,3 *<br>--- | 1,3 | |
| A | PROCEEDINGS OF THE IEEE INTERNATIONAL CONFERENCE ON ACOUSTICS, SPEECH, AND SIGNAL PROCESSING, Tampa, Florida, 26.-29. März 1985, Band 3, Seiten 1245-1248, IEEE, New York, US; J.R. CASAR-CORREDERA et al.: "Data echo nonlinear cancellation"<br>* Seite 1246, Gleichungen 2,4 *<br>--- | 1,7 | RECHERCHIERTE SACHGEBIETE (Int. Cl.4)<br><br>H 04 B<br>H 03 H<br>G 06 F |
| A | PATENT ABSTRACTS OF JAPAN, Band 7, Nr. 60 (P-182)[1205], 12. März 1983; & JP-A-57 204 931 (NIPPON DENKI K.K.) 15-12-1982<br>* Insgesamt *<br>--- | 4-6 | |
| A | EP-A-0 177 239  (A.T. & T.)<br>* Anspruch 1; Figur 2 *<br>---                              -/- | 1,4 | |

Der vorliegende Recherchenbericht wurde für alle Patentansprüche erstellt

| Recherchenort | Abschlußdatum der Recherche | Prüfer |
|---|---|---|
| DEN HAAG | 17-05-1988 | SNELL T. |

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| P,X | EP-A-0 240 055 (A.T. & T.)<br>* Seite 3, Zeile 32 - Seite 4, Zeile 21; Seite 9, Zeilen 8-21; Figur 2 *<br>----- | 1,3 | |
| | | | **RECHERCHIERTE SACHGEBIETE (Int. Cl.4)** |

Der vorliegende Recherchenbericht wurde für alle Patentansprüche erstellt

| Recherchenort | Abschlußdatum der Recherche | Prüfer |
|---|---|---|
| DEN HAAG | 17-05-1988 | SNELL T. |

EPO FORM 1503 03.82 (P0403)